# EUROPEAN PATENT SPECIFICATION

(11) **EP 4 015 098 B1**
(45) Date of publication and mention of the grant of the patent: **03.12.2025**
(21) Application number: 21214475.2
(22) Date of filing: 14.12.2021
(51) Int. Cl.: B08B 3/02

(54) **APPARATUS FOR PRESSURE CLEANING AND METHOD FOR PRESSURE CLEANING**
VORRICHTUNG UND VERFAHREN ZUR DRUCKREINIGUNG
APPAREIL ET PROCÉDÉ DE NETTOYAGE SOUS PRESSION

(30) Priority: 18.12.2020 DK PA202070851
(43) Date of publication of application: 22.06.2022
(73) Proprietor: Foamico ApS, 9400 Nørresundby (DK)
(72) Inventor: RYSHOLT, Kim, 5772 Kværndrup (DK)
(74) Representative: Zacco Denmark A/S

(56) References cited:
- US-A- 3 810 787
- US-A1- 2004 226 578
- US-A1- 2014 037 467

## Description

An apparatus is disclosed for pressure cleaning surfaces of e.g. equipment for food processing as well as a method for pressure cleaning surfaces of equipment for food processing by means of such apparatus.

### Background

Apparatuses for pressure cleaning by means of pressurized water are well known in the art.

A general object with respect to pressure cleaning is that the water consumption for cleaning of a surface should be reduced as the water itself is expensive and as the costs of treatment of the waste water from the pressure cleaning depends on the amount and character of impurities in the water as well as the volume of water. The object of the present invention is to provide an apparatus and a method for pressure cleaning of surfaces, which will contribute to reduce the costs of water as well as of treatment of the waste water.

### The invention

The present invention relates to a pressure cleaning apparatus including a mixing arrangement comprising a water inlet for receiving an inflow of pressurized water, a first additive inlet, a second additive inlet, and a water outlet, the apparatus further comprising a hose connectable to the water outlet at a first end of the hose, and a handle part of which an inlet is connected to a second end of the hose, the handle part comprising an outlet nozzle, preferably an exchangeable outlet nozzle, and an opening mechanism for the flow out through the nozzle,
the mixing arrangement being adapted to selectively provide to the hose a flow of water as received from the water inlet, a flow of water admixed with an additive from the first additive inlet or a flow of water admixed with an additive from the second additive inlet, wherein a flow control valve is provided to control the rate of flow provided from the water outlet out through the outlet nozzle, the flow control valve comprises a movable body, a counter part and a spring, wherein the spring is arranged to bias the movable body against a direction of flow to an open position of the flow control valve, and wherein the movable body and the counter part being arranged so that a flow of water in the direction of flow will provide a force on the movable body towards the counter part, which force may move the movable body to limit the flow rate through the flow control valve.

The movable body may e.g. be a moving plunge cooperating with a counter part in the form of a stationary seat. Alternatively, the movable body may e.g. comprise an orifice that cooperates with a stationary needle forming the counter part.

When pressure cleaning, the human operator may be tempted to use a higher rate of flow of water than prescribed in order to finish the pressure cleaning of the surfaces faster by e.g. altering the opening of the nozzle to allow for more water flow. The consequence of a too high rate of water flow is an excessive water consumption for the pressure cleaning operation and to avoid that, the flow control valve is incorporated into the apparatus.

The flow control valve is preferably adapted to limit the flow rate to a maximum flow rate in the range of 15 to 60 litres/minute, such as in the range of 20 to 40 litres/minute. Depending on the type of apparatus, such flow rate will be sufficient to ensure a throughout cleaning of the surfaces using the method disclosed below while limiting the water consumption to a reasonable level.

The flow control valve in all operational positions of the movable body comprises an open fluid connection between an inlet of the flow control valve and an outlet of the flow control valve. The open fluid connection is in one embodiment as presented below a leak opening and has a double function: to avoid a so-called water hammer effect when the flow control valve closes off the flow of water and to ease the re-opening of the flow control valve. When the flow control valve is closing, a pressure difference over the movable body will increase and close the movable body into contact with the counter part. In order to level out the pressure difference, the water supply to the flow control valve should be closed off and the open fluid connection will ensure that the pressure on the two sides of the movable body will equalize and the spring will move the movable body away from the counter part to open the flow control valve and enable operation of the apparatus to resume.

The water outlet of the mixing arrangement may in one embodiment of the invention comprise a plurality of outlet connections, such as snap connections for the first end of the hose, whereby the user of the apparatus may move the hose between the different outlet connections in order to select between a flow of water as received from the water inlet, a flow of water admixed with an additive from the first additive inlet or a flow of water admixed with an additive from the second additive inlet.

The the mixing arrangement further comprises a control arrangement, which is arranged to selectively provide the water outlet with a flow of water as received from the water inlet, a flow of water admixed with an additive from the first additive inlet or a flow of water admixed with an additive from the second additive inlet.

The apparatus is preferably suitable to operate with an inlet pressure at the water inlet of at least 25 bar, such as at least 50 bar.

The present invention furthermore relates to a method of cleaning surfaces of equipment for food processing by means of the apparatus previously disclosed, where the method comprises the steps of
1) pressure cleaning the surfaces by means of a flow of water as received from the water inlet provided from the outlet nozzle of the handle part,
2) providing the surfaces with a foam of water admixed with an additive from the first additive inlet provided from the outlet nozzle of the handle part, and
3) pressure cleaning the surfaces by means of a flow of water as received from the water inlet provided from the outlet nozzle of the handle part.

The additive from the first additive inlet is preferably a detergent. In step 2), pressurized air may be added to the mixture of water and the additive to enhance the formation of foam.

The method may further comprise the steps of
4) providing the surfaces with a foam of water admixed with an additive from the second additive inlet provided from the outlet nozzle of the handle part, and
5) pressure cleaning the surfaces by means of a flow of water as received from the water inlet provided from the outlet nozzle of the handle part.

The additive from the second additive inlet is preferably a disinfectant, such as an alkaline disinfectant. In step 4), pressurized air may be added to the mixture of water and the additive to enhance the formation of foam.

Furthermore, the present invention relates to the use of an apparatus as disclosed previously for cleaning of surfaces, in particular for cleaning of surfaces of equipment for food processing.

### Figures

An example of an embodiment of the present invention is illustrated in the figures of which
Fig. 1 shows the apparatus,
Fig. 2 is a cross-section of the flow control valve in an open position, and
Fig. 3 is a cross-section of the flow control valve of Fig. 2 in a closed position.

### Detailed description

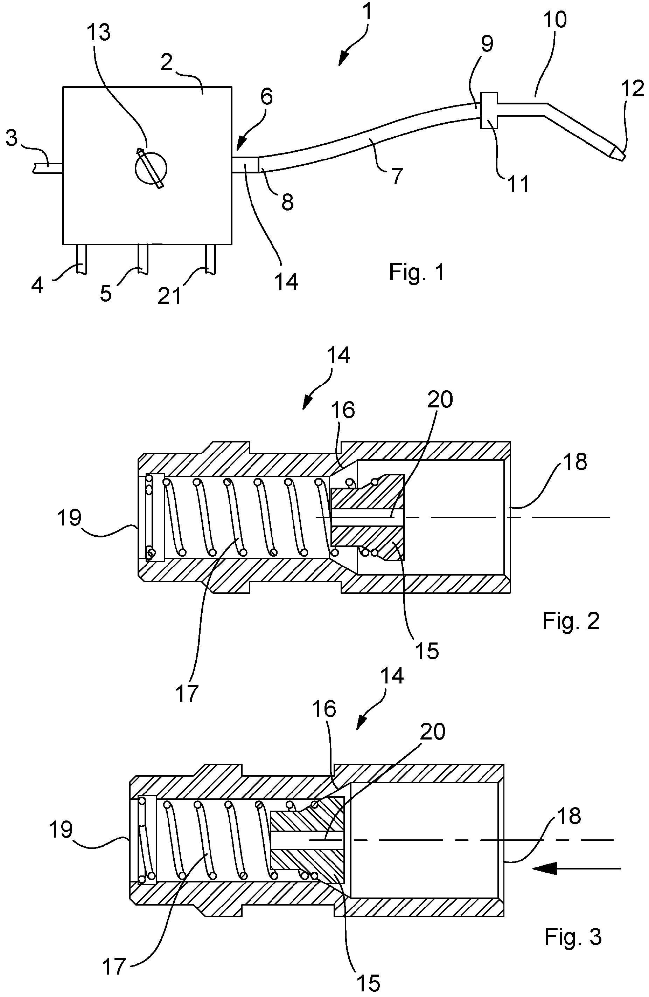

An apparatus 1 for pressure cleaning of in particular surfaces of equipment for food processing, such as meat processing equipment, dairy processing equipment or brewery equipment is shown in Fig. 1. The apparatus comprises a mixing arrangement 2 for mixing pressurized water and additives for the pressure cleaning. The mixing arrangement 2 comprises a water inlet 3 for receiving an inflow of pressurized water from a central source of pressurized water for a plurality of pressure cleaning stations or alternatively from a build-in pump of the apparatus. The water pressure at the water inlet 3 is typically from 20 to 45 bar. The mixing arrangement 2 has a first additive inlet 4 and a second additive inlet 5 for a first additive and a second additive, respectfully, that may be admixed with the pressurized water from the water inlet 3 and be led to the water outlet 6 of the mixing arrangement 2. The contents of the flow out through the water outlet 6 is controlled by the manually operated control arrangement 13 in the form of a dial and may be the water received from the water inlet 3, the water from the water inlet 3 admixed with a first additive in the form of a detergent from the first additive inlet 4 or the water from the water inlet 3 admixed with a second additive in the form of a disinfectant from the second additive inlet 5. The disinfectant may be an alkaline disinfectant or an acidic disinfectant, and more additive inlets may in particular apparatuses according to the present invention be added to provide for the use of alkaline disinfectants as well as acidic disinfectants and possibly also for other disinfectants comprising e.g. quaternary ammonium, chlorine or iodine. The mixing arrangement 2 furthermore comprises an inlet 21 for pressurized air to be admixed with the water and the first or second additive for the formation of foam.

A flexible hose 7 is at a first end 8 connected to the water outlet 6 by means of a snap release coupling and is at the other end 9 connected to an inlet 11 of a handle part 10. The handle part 10 comprises an opening mechanism (not shown) for the flow through the hose 7 and handle part 10 out through a nozzle 12. The opening mechanism is typically in the form of a finger-operated trigger valve by means of which the flow can be controlled by the user of the pressure cleaning apparatus. The nozzle 12 may be exchangeable for use for pressure cleaning, for providing a foam and possibly for other functions.

The apparatus 1 comprises a flow control valve 14 arranged at the water outlet 6 of the mixing arrangement 2 for limiting the rate of flow of water out through the nozzle 12. When pressure cleaning, the human operator may be tempted to use a higher rate of flow of water than prescribed in order to finish the pressure cleaning of the surfaces faster by e.g. altering the opening of the nozzle 12 to allow for more water flow. The consequence of a too high rate of water flow is however an excessive water consumption for the pressure cleaning operation and to avoid that, the flow control valve 14 is incorporated into the apparatus 1. Details of the interior of the flow control valve are shown in Fig. 2 at no or an acceptable low flow rate and in Fig. 3 at an excessive flow rate.

The flow control valve 14 comprises a movable body 15 that is biased towards the inlet 18 of the control valve by means of a coil spring 17. Stationary inside the flow control valve 14 is a counter part 16 to the movable body 15, the counter part forming a seat that matches with the shape of the movable body so that the two together may form a substantially complete blockage of the flow passage through the flow control valve 14 except of a leak opening 20 formed through the movable body 15. The flow direction is indicated in Fig. 3 with an arrow.

The flow control valve 14 remains open for flow through it with little to no flow resistance when the flow rate is below the actuating flow rate and the movable body 15 is pushed towards the inlet 18 of the flow control valve 14 by means of the spring 17. At a higher flow rate, the stagnation pressure at the side of the movable body 15 facing the inlet 18 will also be higher, as the stagnation pressure is proportional to the square of the velocity of the water flow through the flow control valve 14. The stagnation pressure pushes the movable body 15 towards the outlet 19 of the flow control valve and against the push from the spring 17. In case the flow rate reaches a given, maximal flow rate, such as e.g. 30 litres/minute, determined by the design of the flow control valve, the pressure drop of the flow over the opening between the movable body 15 and the counter part 16 will be so large that the pressure difference over the movable body 15 will bring the movable body 15 and the counter part 16 into contact and the flow through the flow control valve 14 will be largely prevented except for the flow through the leak opening 20 in the movable body 15.

In order for the apparatus 1 to be functional again, the access of pressurized water to the inlet 18 of the flow control valve 14 must be shut off, which will cause the pressure on the inlet 18 side of the movable body 15 to decrease due to the presence of the leak opening 20 through the movable body 15. When the pressure decreases, the spring 17 will push the movable body 15 away from the counter part 16 and the flow control valve 14 will become open again for a through-flow of water. Thus, the operation of the apparatus 1 can continue.

In operation for cleaning surfaces of equipment for food processing, such as meat processing equipment, dairy processing equipment or brewery equipment, the apparatus 1 is in an initial step employed for pressure cleaning with use of pressurized water from the water inlet 3 to the nozzle 12 for removing solid particles of e.g. meat or fat from the surfaces as well as water soluble substances as blood, juices etc. the pressure cleaning step is conducted at a high flow rate, such as 30 litres/minute, and the flow control valve 14 prevents a higher flow rate.

In a second step, the control arrangement 13 of the mixing arrangement 2 is shifted to provide a mixture of water from the water inlet 3 and detergent provided from the first additive inlet 4 as well as pressurized air from the inlet 21 for pressurized air. The nozzle 12 for pressure cleaning is replaced with a nozzle 12 for providing a foam of the mixture of water and detergent. The apparatus 1 is now manually operated to cover the surfaces in a layer of foam, which is allowed to act on the surfaces for a period of 5 to 10 minutes for dissolving and loosening remaining impurities, such as fats and proteins from the surfaces.

In a third step, the apparatus is changes for pressure cleaning with water from the water inlet 3 as in the initial step, and the foam and impurities are pressure cleaned from the surfaces.

After that, in a fourth step the control arrangement 13 of the mixing arrangement 2 is shifted to provide a mixture of water from the water inlet 3 and a disinfectant, such as an alkaline disinfectant from the second additive inlet 5 as well as pressurized air from the inlet 21 for pressurized air, and the handle part 10 is provided with the nozzle 12 for providing a foam of the mixture of water and disinfectant. The operator applied a layer of the foam to the surfaces to be cleaned to inactivate possible remaining microorganisms on the surfaces.

In one embodiment, the mixing arrangement 2 comprise a third additive inlet, which is arranged to supply an acidic disinfectant, which may be admixed with the water in the fourth step of operation alternating with the alkaline disinfectant from the second additive inlet 5, so that e.g. every second or every third operation for cleaning the surfaces of equipment for food processing, the acidic disinfectant is applied whereas the alkaline disinfectant is applied in the remaining operations, whereby a thorough cleanliness of the surfaces is ensured. Other disinfectants comprising e.g. quaternary ammonium, chlorine or iodine may also be applied as alternatives or in addition to the mentioned disinfectants.

The fifth step includes that the apparatus again is changed for pressure cleaning with water from the water inlet 3 as in the initial step and the third step, and the foam with disinfectant is pressure cleaned from the surfaces.

### List of reference numerals

- 1: Apparatus for pressure cleaning
- 2: Mixing arrangement
- 3: Water inlet
- 4: First additive inlet
- 5: Second additive inlet
- 6: Water outlet
- 7: Hose
- 8: First end of hose
- 9: Second end of hose
- 10: Handle part
- 11: Handle part inlet
- 12: Nozzle of handle part
- 13: Control arrangement of mixing arrangement
- 14: Flow control valve
- 15: Movable body of flow control valve
- 16: Counter part of flow control valve
- 17: Spring of flow control valve
- 18: Inlet of flow control valve
- 19: Outlet of flow control valve
- 20: Leak opening in movable body
- 21: Inlet for pressurized air

## Claims

1. Pressure cleaning apparatus (1) including
a mixing arrangement (2) comprising
a water inlet (3) for receiving an inflow of pressurized water,
a first additive inlet (4),
a second additive inlet (5), and
a water outlet (6),
the apparatus further comprising a hose (7) connectable to the water outlet (6) at a first end (8) of the hose (7), and
a handle part (10) of which an inlet (11) is connected to a second end (9) of the hose (7), the handle part comprising an outlet nozzle (12) and an opening mechanism for the flow out through the nozzle (12),
the mixing arrangement (2) further comprising a control arrangement (13), which is arranged to selectively provide the water outlet (6) with a flow of water as received from the water inlet (3), a flow of water admixed with an additive from the first additive inlet (4) or a flow of water admixed with an additive from the second additive inlet (5),
wherein a flow control valve (14) is provided to control the rate of flow provided from the water outlet (6) out through the outlet nozzle (12), the flow control valve (14) comprises a movable body (15), a counter part (16) and a spring (17), wherein the spring (17) is arranged to bias the movable body (15) against a direction of flow through the flow control valve (14) to an open position of the flow control valve (14), and wherein the movable body (15) and the counter part (16) being arranged so that a flow of water in the direction of flow will provide a force on the movable body (15) towards the counter part (16), which force may move the movable body (15) to limit the flow rate through the flow control valve (14), **characterized in that** the flow control valve (14) in all operational positions of the movable body (15) comprises an open fluid connection (20) between an inlet (18) of the flow control valve (14) and an outlet (19) of the flow control valve (14).

2. Apparatus according to claim 1, wherein the flow control valve (14) is adapted to limit the flow rate to a maximum flow rate in the range of 15 to 60 litres/minute, such as in the range of 20 to 40 litres/minute.

3. Apparatus (1) according to any of the preceding claims, which can operate with an inlet pressure at the water inlet (3) of at least 35 bar, such as at least 40 bar.

4. Method of cleaning surfaces of equipment for food processing by means of an apparatus (1) according to any of the preceding claims, the method comprising the steps of
1) pressure cleaning the surfaces by means of a flow of water as received from the water inlet (3) provided from the outlet nozzle (12) of the handle part (10),
2) providing the surfaces with a foam of water admixed with an additive from the first additive inlet (4) provided from the outlet nozzle (12) of the handle part (10), and
3) pressure cleaning the surfaces by means of a flow of water as received from the water inlet (3) provided from the outlet nozzle (12) of the handle part (10).

5. Method according to claim 4, wherein the additive from the first additive inlet (4) is a detergent.

6. Method according to claim 4 or 5, further comprising the steps of
4) providing the surfaces with a foam of water admixed with an additive from the second additive inlet (5) provided from the outlet nozzle (12) of the handle part (10), and
5) pressure cleaning the surfaces by means of a flow of water as received from the water inlet (3) provided from the outlet nozzle (12) of the handle part (10).

7. Method according to claim 6, wherein the additive from the second additive inlet (5) is a disinfectant, such as an alkaline disinfectant.

8. Use of an apparatus according to any of claims 1 to 3 for cleaning of surfaces, in particular for cleaning of surfaces of equipment for food processing.

## Patentansprüche

1. Vorrichtung (1) zur Druckreinigung, die Folgendes beinhaltet
eine Mischanordnung (2), umfassend
einen Wassereinlass (3) zum Empfangen eines Zuflusses von Druckwasser,
einen ersten Zusatzeinlass (4),
einen zweiten Zusatzeinlass (5) und
einen Wasserauslass (6),
wobei die Vorrichtung ferner Folgendes umfasst: einen Schlauch (7), der an einem ersten Ende (8) des Schlauches (7) an den Wasserauslass (6) anschließbar ist, und
ein Griffteil (10), von dem ein Einlass (11) an ein zweites Ende (9) des Schlauches (7) angeschlossen ist, wobei das Griffteil eine Auslassdüse (12) und einen Öffnungsmechanismus für den Ausfluss durch die Düse (12) umfasst,
wobei die Mischanordnung (2) ferner Folgendes umfasst: eine Steueranordnung (13), die dazu ausgelegt ist, dem Wasserauslass (6) selektiv einen Wasserfluss, der von dem Wassereinlass (3) empfangen wird, einen Wasserfluss, dem ein Zusatz von dem ersten Zusatzeinlass (4) beigemischt wird, oder einen Wasserfluss, dem ein Zusatz von dem zweiten Zusatzeinlass (5) beigemischt wird, bereitzustellen,
wobei ein Flussregelventil (14) dazu bereitgestellt ist, den Durchfluss, der von dem Wasserauslass (6) durch die Auslassdüse (12) hinaus bereitgestellt wird, zu regeln, wobei das Flussregelventil (14) einen bewegbaren Körper (15), ein Gegenteil (16) und eine Feder (17) umfasst, wobei die Feder (17) dazu ausgelegt ist, den bewegbaren Körper (15) gegen eine Flussrichtung durch das Flussregelventil (14) zu einer offenen Position des Flussregelventils (14) vorzuspannen, und wobei der bewegbare Körper (15) und das Gegenteil (16) derart ausgelegt sind, dass ein Wasserfluss in die Flussrichtung eine Kraft auf den bewegbaren Körper (15) in Richtung des Gegenteils (16) bereitstellen wird, und diese Kraft den bewegbaren Körper (15) bewegen kann, um den Durchfluss durch das Flussregelventil (14) zu begrenzen, **dadurch gekennzeichnet, dass** das Flussregelventil (14) in allen Betriebsstellungen des bewegbaren Körpers (15) eine offene Fluidverbindung (20) zwischen einem Einlass (18) des Flussregelventils (14) und einem Auslass (19) des Flussregelventils (14) umfasst.

2. Vorrichtung nach Anspruch 1, wobei das Flussregelventil (14) dazu angepasst ist, den Durchfluss auf einen maximalen Durchfluss im Bereich von 15 bis 60 Liter/Minute, zum Beispiel im Bereich von 20 bis 40 Liter/Minute zu begrenzen.

3. Vorrichtung (1) nach einem der vorhergehenden Ansprüche, die mit einem Einlassdruck an dem Wassereinlass (3) von mindestens 35 bar, zum Beispiel mindestens 40 bar, betrieben werden kann.

4. Verfahren zum Reinigen von Oberflächen von Geräten zur Lebensmittelverarbeitung mithilfe einer Vorrichtung (1) nach einem der vorhergehenden Ansprüche, wobei das Verfahren die folgenden Schritte umfasst
1) Druckreinigen der Oberflächen mithilfe eines Wasserflusses, der von dem Wassereinlass (3) empfangen und von der Auslassdüse (12) des Griffteils (10) bereitgestellt wird,
2) Versehen der Oberflächen mit einem Schaum aus Wasser, dem ein Zusatz von dem ersten Zusatzeinlass (4) beigemischt wird und der von der Auslassdüse (12) des Griffteils (10) bereitgestellt wird, und
3) Druckreinigen der Oberflächen mithilfe eines Wasserflusses, der von dem Wassereinlass (3) empfangen und von der Auslassdüse (12) des Griffteils (10) bereitgestellt wird.

5. Verfahren nach Anspruch 4, wobei der Zusatz von dem ersten Zusatzeinlass (4) ein Reinigungsmittel ist.

6. Verfahren nach Anspruch 4 oder 5, das ferner die folgenden Schritte umfasst
4) Versehen der Oberflächen mit einem Schaum aus Wasser, dem ein Zusatzstoff von dem zweiten Zusatzeinlass (5) beigemischt wird und der von der Auslassdüse (12) des Griffteils (10) bereitgestellt wird, und
5) Druckreinigen der Oberflächen mithilfe eines Wasserflusses, der von dem Wassereinlass (3) empfangen und von der Auslassdüse (12) des Griffteils (10) bereitgestellt wird.

7. Verfahren nach Anspruch 6, wobei der Zusatz von dem zweiten Zusatzeinlass (5) ein Desinfektionsmittel, zum Beispiel ein alkalisches Desinfektionsmittel, ist.

8. Verwendung einer Vorrichtung nach einem der Ansprüche 1 bis 3 zum Reinigen von Oberflächen, insbesondere zum Reinigen von Oberflächen von Geräten zur Lebensmittelverarbeitung.

## Revendications

1. Appareil de nettoyage à pression (1) comprenant
un dispositif de mélange (2) comprenant
une entrée d'eau (3) pour recevoir un flux d'eau sous pression,
une première entrée d'additif (4),
une deuxième entrée d'additif (5), et
une sortie d'eau (6),
l'appareil comprenant en outre un tuyau (7) pouvant être raccordé à la sortie d'eau (6) à une première extrémité (8) du tuyau (7), et
une partie poignée (10) dont une entrée (11) est raccordée à une deuxième extrémité (9) du tuyau (7), la partie poignée comprenant une buse de sortie (12) et un mécanisme d'ouverture pour l'écoulement à travers la buse (12),
le dispositif de mélange (2) comprenant en outre un agencement de commande (13), qui est agencé pour fournir de manière sélective à la sortie d'eau (6) un écoulement d'eau tel que reçu à partir de l'entrée d'eau (3), un écoulement d'eau mélangé à un additif provenant de la première entrée d'additif (4) ou un écoulement d'eau mélangé à un additif provenant de la deuxième entrée d'additif (5),
dans lequel une vanne de commande d'écoulement (14) est prévue pour commander le débit fourni par la sortie d'eau (6) à travers la buse de sortie (12), la vanne de commande d'écoulement (14) comprend un corps mobile (15), une contre-pièce (16) et un ressort (17), dans lequel le ressort (17) est agencé pour solliciter le corps mobile (15) dans la direction opposée à l'écoulement à travers la vanne de commande d'écoulement (14) vers une position ouverte de la vanne de commande d'écoulement (14), et dans lequel le corps mobile (15) et la contre-pièce (16) sont agencés de sorte qu'un écoulement d'eau dans la direction d'écoulement exerce une force sur le corps mobile (15) vers la contre-pièce (16), laquelle force peut déplacer le corps mobile (15) pour limiter l'écoulement à travers la vanne de commande d'écoulement (14), **caractérisé en ce que** la vanne de commande d'écoulement (14), dans toutes les positions fonctionnelles du corps mobile (15), comprend un raccordement de fluide ouvert (20) entre une entrée (18) de la vanne de commande d'écoulement (14) et une sortie (19) de la vanne de commande d'écoulement (14).

2. Appareil selon la revendication 1, dans lequel la vanne de commande d'écoulement (14) est adaptée pour limiter le débit d'écoulement à un débit d'écoulement maximal compris entre 15 et 60 litres/minute, tel que compris entre 20 et 40 litres/minute.

3. Appareil (1) selon l'une quelconque des revendications précédentes, qui peut fonctionner avec une pression d'entrée au niveau de l'entrée d'eau (3) d'au moins 35 bars, telle qu'au moins 40 bars.

4. Procédé de nettoyage des surfaces d'équipements destinés à la transformation des aliments à l'aide d'un appareil (1) selon l'une quelconque des revendications précédentes, le procédé comprenant les étapes consistant à
1) nettoyer les surfaces sous pression à l'aide d'un écoulement d'eau provenant de l'entrée d'eau (3) fournie par la buse de sortie (12) de la partie poignée (10),
2) fournir aux surfaces une mousse d'eau mélangée à un additif provenant de la première entrée d'additif (4) prévue à partir de la buse de sortie (12) de la partie poignée (10), et
3) nettoyer les surfaces sous pression au moyen d'un écoulement d'eau provenant de l'entrée d'eau (3) prévue à partir de la buse de sortie (12) de la partie poignée (10) .

5. Procédé selon la revendication 4, dans lequel l'additif provenant de la première entrée d'additif (4) est un détergent.

6. Procédé selon la revendication 4 ou 5, comprenant en outre les étapes consistant à
4) fournir aux surfaces une mousse d'eau mélangée à un additif provenant de la deuxième entrée d'additif (5) prévue à partir de la buse de sortie (12) de la partie poignée (10), et
5) nettoyer les surfaces sous pression au moyen d'un écoulement d'eau provenant de l'entrée d'eau (3) fournie par la buse de sortie (12) de la partie poignée (10).

7. Procédé selon la revendication 6, dans lequel l'additif provenant de la deuxième entrée d'additif (5) est un désinfectant, tel qu'un désinfectant alcalin.

8. Utilisation d'un appareil selon l'une quelconque des revendications 1 à 3 pour le nettoyage de surfaces, en particulier pour le nettoyage de surfaces d'équipements destinés à la transformation des aliments.
